# FASCICULE DE BREVET EUROPEEN

(11) **EP 3 577 374 B1**
(45) Date de publication et mention de la délivrance du brevet: **24.09.2025**
(21) Numéro de dépôt: 17829654.7
(22) Date de dépôt: 22.12.2017
(51) Int. Cl.: F16K 5/08, F16K 31/04, F16K 27/00

(54) **VANNE MOTORISEE A BOISSEAU**
MOTORISIERTER HAHN
MOTORISED PLUG VALVE

(30) Priorité: 06.02.2017 FR 1750974
(43) Date de publication de la demande: 11.12.2019
(73) Titulaire: MMT AG, 6300 Zug (CH)
(72) Inventeur: MONNIN, Jonas, 2333 La Ferrière (CH); SIGG, Daniel, 2605 Sonceboz-Sombeval (CH)
(74) Mandataire: IP Trust
(86) Numéro de dépôt international: PCT/EP2017/084386
(87) Numéro de publication internationale: WO 2018/141468

(56) Documents cités:
- US-A1- 2001 035 510
- US-B1- 6 257 271
- US-B1- 9 185 856

## Description

### DOMAINE TECHNIQUE DE L'INVENTION

L'invention se rapporte au domaine des vannes motorisées comportant un corps avec au moins une entrée et une sortie, un organe d'obturation monté mobile dans le corps pour obturer ou libérer un passage entre l'entrée et la sortie, et un actionneur pour commander le déplacement de l'organe d'obturation.

Selon une application particulière, mais non limitative, l'invention concerne la gestion des vapeurs de carburant pour véhicule automobile et plus particulièrement une soupape de purge de ces vapeurs.

Le système de recyclage des vapeurs de carburant du réservoir comprend notamment un absorbeur de vapeurs de carburant et une soupape de purge de l'absorbeur de vapeurs de carburant.

L'absorbeur de vapeurs de carburant reçoit les vapeurs du réservoir sous l'effet de la pression de ces derniers qu'il récupère et emmagasine à partir de granules de charbon actif jusqu'à ce que le module de commande du groupe motopropulseur détermine le moment où les vapeurs peuvent être consumées dans le processus de combustion normal.

De façon générale, le système de recyclage des vapeurs de carburant du réservoir comprend un absorbeur de vapeurs de carburant, une soupape de purge de l'absorbeur de vapeurs de carburant, une soupape de ventilation de l'absorbeur de vapeurs de carburant, une soupape de capotage et un capteur de pression du réservoir à carburant, un bouchon de réservoir étanche, un orifice de service d'émission de vapeurs de carburant et le module de commande du groupe motopropulseur.

La soupape de purge de l'absorbeur de vapeurs de carburant permet le débit ou non des vapeurs en provenance de l'absorbeur de vapeurs de carburant vers la tubulure d'admission. Cette soupape normalement fermée est commandée par modulation de largeur d'impulsions (MLI) sous l'effet du module de commande du groupe motopropulseur afin de commander avec précision le débit de vapeurs de carburant vers les chambres de combustion. La soupape est également ouverte pendant l'exécution du contrôle de diagnostic, permettant à la dépression du moteur d'exercer son vide dans le système de recyclage des vapeurs de carburant.

Lors du dégazage des vapeurs de l'absorbeur de vapeurs de carburant, le module de commande du groupe motopropulseur commande l'ouverture de la soupape de purge de l'absorbeur des vapeurs de carburant, permettant d'appliquer la dépression du moteur à l'absorbeur de vapeurs de carburant. La soupape de ventilation de l'absorbeur de vapeurs de carburant, normalement ouverte, permet à l'air frais d'être aspiré vers l'absorbeur de vapeurs de carburant lequel, en circulant à travers les granules de charbon actif, extrait les hydrocarbures vers la tubulure d'admission afin d'être consumés pendant la combustion normale.

### ETAT DE LA TECHNIQUE ANTERIEURE

On connaît dans l'état de la technique des vannes motorisées utilisant des vannes à boisseau, comme par exemple décrites dans les documents US9441741, JP1995208628, JP20031561 05, US9185856 B1, US2001/035510 A1, US6257271 B1.

Ces solutions ne présentent jamais l'intégration de la vanne à boisseau avec le conduit à obstruer. Il en résulte des ensembles nécessitant des joints d'étanchéité nombreux et un encombrement important de la jonction de la vanne avec l'actionneur.

Dans les solutions de l'état de la technique concernant la purge l'absorbeur de vapeurs de carburant, la vanne constituant la soupape de purge de l'absorbeur de vapeurs de carburant et permettant le débit ou non des vapeurs en provenance de l'absorbeur de vapeurs de carburant vers la tubulure d'admission est normalement fermée et commandée par un actionneur de type solénoïde (actionneur à réluctance variable sans aimant) piloté par une commande en MLI sous l'effet du module de commande du groupe motopropulseur afin de commander avec précision le débit de vapeurs de carburant vers les chambres de combustion. La soupape est également ouverte pendant l'exécution du contrôle de diagnostic, permettant à la dépression du moteur d'exercer son vide dans le système de recyclage des vapeurs de carburant.

Plus précisément, un actionneur de type solénoïde (ou électro-aimant) monostable permet de faire bouger un élément mobile selon deux positions : une position sans courant maintenue par un ressort et une autre position obtenue lorsque l'on alimente le solénoïde permettant de déplacer l'élément mobile. Un pointeau alors fixé sur l'élément mobile obture le canal de passage du fluide lorsqu'il est en contact avec le réceptacle du pointeau. Ce canal est alors ouvert lorsque le solénoïde est commandé, permettant alors de laisser libre le passage du fluide. Afin de faire varier le degré d'ouverture moyen de la vanne, l'actionneur est ouvert et fermé en permanence avec des durées en position fermée et ouverte variable et cela à une fréquence d'environ 10Hz.

Les avantages de ce type d'actionneur solénoïde est multiple : un prix de revient faible, une simplicité de pilotage (simple MLI), un faible temps de réponse entre l'état ouvert et fermé (égale à la fréquence du pilotage), une bonne compacité de par la simplicité de conception.

Le brevet européen EP0397058 décrit un exemple d'électrovanne comprenant un siège de vanne disposé entre un orifice d'entrée et un orifice de sortie comprenant un actionneur de type solénoïde.

### INCONVENIENTS DE L'ART ANTERIEUR

Les vannes actuelles, motorisées à l'aide d'électro-aimant, présentent plusieurs inconvénients liés à leur conception :
- sensibilité aux particules provenant du réservoir à charbon actif (impliquant un risque de fuite en cas de présence de particules entre le pointeau et le joint),
- encrassage du filtre induisant une réduction du débit pouvant traverser la vanne,
- effets mémoires sur les joints d'étanchéité (la vanne étant normalement en position fermée, la force d'appui entre le pointeau et le joint peut générer un fluage du joint pouvant engendrer une fuite),
- bruit (la fréquence de commande du solénoïde est d'environ 10Hz ce qui génère donc un bruit de claquement audible assez important),
- effet de collage du au (la vanne étant normalement en position fermée, il se peut que le pointeau reste collé contre le joint après une longue période d'inactivité),
- débit limité (la conception de ce type de vanne ne permet pas d'avoir un diamètre d'ouverture important sans risquer d'avoir de légères fuites si la taille du solénoïde n'est pas fortement augmentée),
- absence de diagnostic direct possible (les vannes du marché possèdent deux uniques connexions électriques servant à actionner le pointeau mobile du solénoïde, une défaillance du système - bobinage endommagé, pointeau collé, etc.- ne peut ainsi pas être détecté de manière directe),
- consommation de courant (sachant que la régulation du pourcentage d'ouverture de la vanne se fait en utilisant une MLI, l'actionneur consomme en permanence du courant entre 1 et 99% d'ouverture).

Par ailleurs, le développement des nouveaux moteurs utilisant la levée variable de soupape induit une diminution du vide naturel du moteur servant ici à aspirer les vapeurs d'essence à travers la vanne de régulation. Cela a pour effet de devoir augmenter le diamètre de passage de la vanne afin de garantir un débit massique suffisant malgré une différence de pression plus faible et de garantir une résolution d'ouverture de la vanne suffisante malgré une différence de pression plus faible.

### EXPOSE DE L'INVENTION

La présente invention vise à pallier les inconvénients de l'état de la technique actuel en améliorant notamment la compacité des vannes à boisseau de l'art antérieur et le nombre de joints nécessaire à l'étanchéité.

La présente invention vise aussi à permettre la réalisation d'une vanne de purge de réservoir de l'absorbeur de carburant sous la forme d'une vanne à ouverture progressive, de type à boisseau, commandée par un motoréducteur.

La présente invention vise notamment à apporter des solutions en termes de :
- consommation électrique minimisée, la vanne n'étant commandée (et donc consommatrice de courant électrique) que lorsqu'un déplacement est souhaité,
- bruit minimisé, la vanne n'étant en mouvement que pendant la phase de positionnement, elle ne génère pas de nuisance sonore en permanence,
- modulation du débit d'ouverture, avec possibilité d'obtenir une grande section de passage de gaz sans impacter le design général de la vanne motorisée,
- fonction autonettoyante, la configuration spécifique de la vanne à boisseau permettant de racler les particules du filtre à charbon du réservoir lors du mouvement de la vanne,
- fonction de diagnostic grâce à l'intégration d'un capteur de position pouvant donner connaissance de la position d'ouverture de la vanne à boisseau très précisément.

Un des objets de l'invention est aussi de proposer une construction simplifiée notamment en terme de nombre de joints d'étanchéité nécessaires grâce à l'utilisation d'un boitier de vanne formant, en une seule pièce, au moins un conduit d'admission ou d'échappement.

### SOLUTION APPORTEE PAR L'INVENTION

Plus particulièrement l'invention concerne selon son acception la plus générale une vanne motorisée comportant un corps avec au moins un conduit d'admission et un conduit d'échappement, un organe d'obturation monté mobile dans le corps pour obturer ou libérer un passage entre ledit conduit d'admission et ledit conduit d'échappement, et un système motorisé de régulation pour commander le déplacement de l'organe d'obturation, ledit système motorisé de régulation comprenant une vanne à boisseau mettant en relation lesdits conduits d'admission et d'échappement, un motoréducteur comprenant un moteur électrique et un train d'engrenages réducteur, ledit train d'engrenages comprenant une roue de sortie déplaçant en rotation le boisseau de ladite vanne afin de permettre une ouverture progressive de la vanne caractérisée en ce que ledit motoréducteur est formé d'un boitier comprenant lesdits moteur électrique et train d'engrenages réducteur, le corps de vanne étant formé intégralement avec le boitier.

Selon des variantes :
- l'un au moins desdits conduits d'admission ou d'échappement est formé intégralement avec ledit boitier.
- ladite roue de sortie est prolongée par un arbre venant directement en connexion mécanique avec ledit boisseau.
- ladite roue de sortie est solidaire d'un aimant de capteur, une sonde magnétosensible (18) étant positionnée au voisinage dudit aimant de capteur.
- la roue de sortie est formée intégralement avec le boisseau.
- ledit boitier est formé par injection d'une matière plastique et en ce que le moteur électrique comprend un stator surmoulé par ladite matière plastique.
- le boitier forme un premier logement pour le positionnement d'un circuit imprimé recevant une électronique de commande dudit moteur et un deuxième logement pour le positionnement des engrenages dudit train réducteur et en ce que le rotor du moteur électrique est logé dans le deuxième logement et séparé du stator par une peau de surmoulage ou une paroi.

L'invention concerne aussi l'application d'une telle vanne motorisée intégrée, en tant que soupape, au circuit de purge de l'absorbeur de vapeurs de carburant.

L'invention concerne également une vanne motorisée comportant un corps avec au moins un conduit d'admission et un conduit d'échappement, un organe d'obturation sous la forme d'un boisseau monté mobile dans le corps pour obturer ou libérer un passage entre ledit conduit d'admission et ledit conduit d'échappement, et un système motorisé de régulation pour commander le déplacement du boisseau, ledit système motorisé de régulation comprenant un motoréducteur comprenant un moteur électrique et un train d'engrenages réducteur, ledit train d'engrenages comprenant une roue de sortie déplaçant en rotation le boisseau de ladite vanne afin de permettre une ouverture progressive de la vanne caractérisée en ce que la vanne est intégrée, en tant que soupape, au circuit de purge de l'absorbeur de vapeurs de carburant.

### BREVE DESCRIPTION DES FIGURES

D'autres caractéristiques et avantages de l'invention ressortiront à la lecture qui suit d'exemples de réalisation détaillés, en référence aux figures annexées qui représentent respectivement :
- la figure 1, une vue en perspective d'un premier exemple de réalisation d'une vanne selon l'invention ;
- la figure 2, une vue en perspective coupée longitudinalement du premier exemple de réalisation d'une vanne selon l'invention ;
- la figure 3, une vue du dessus du premier exemple de réalisation d'une vanne selon l'invention, couvercle retiré ;
- la figure 4, une vue en perspective isolée du boitier du premier exemple de réalisation d'une vanne selon l'invention ;
- la figure 5, une vue en perspective coupée longitudinalement d'un second exemple de réalisation de la vanne selon l'invention où un des conduits d'admission ou d'échappement est formé par le boitier du motoréducteur ;
- la figure 6, une vue en perspective coupée longitudinalement d'un troisième exemple de réalisation de la vanne selon l'invention où les deux conduits d'admission et d'échappement sont formés par le boitier du motoréducteur ;
- la figure 7a, une vue en perspective coupée longitudinalement d'un quatrième exemple de réalisation de la vanne selon l'invention où les deux conduits d'admission et d'échappement sont formés par le boitier du motoréducteur ;
- la figure 7b, une vue éclatée de la vanne présentée en figure 7a.

### DESCRIPTION DETAILLEE D'UN MODE DE REALISATION

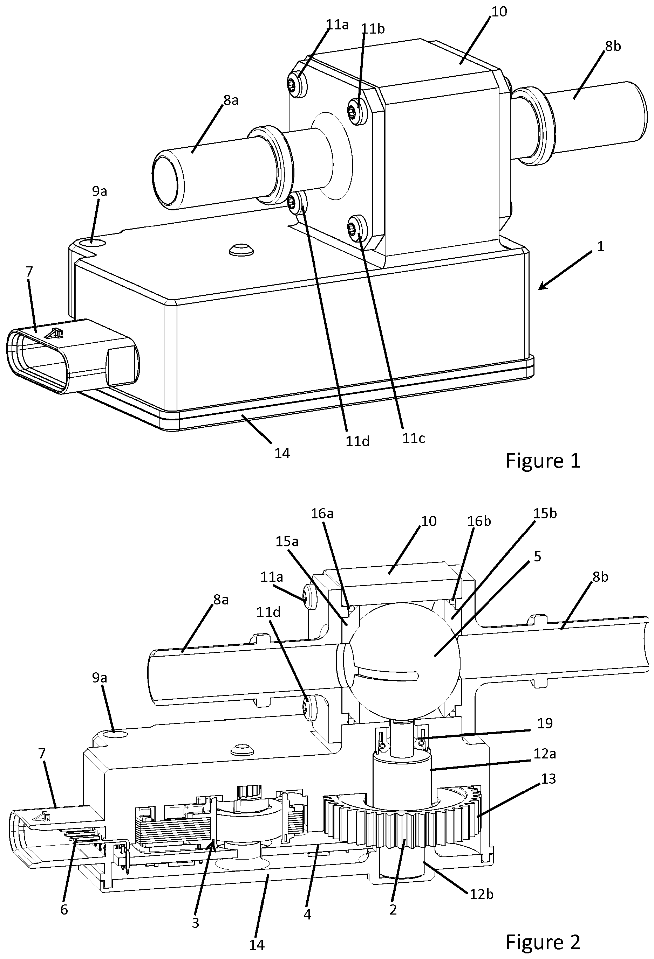

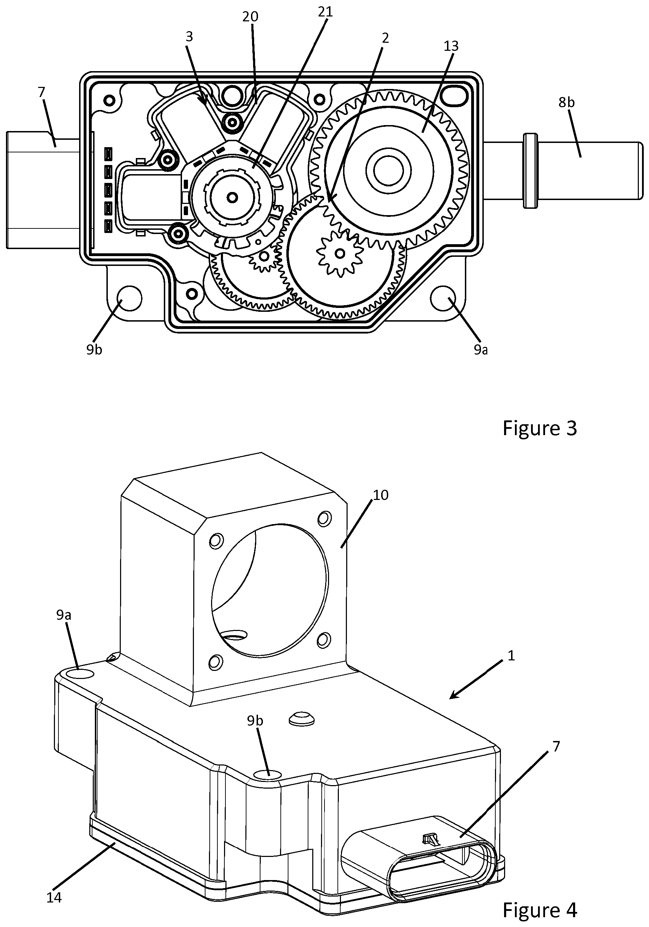

En figure 1, la soupape motorisée de purge de l'absorbeur de vapeurs de carburant est formée d'un boitier (1), formant en une seule pièce, le corps de vanne (10) sur lequel se fixent deux conduits d'admission (8a) et d'échappement (8b). Le boitier (1) est par ailleurs prolongé par un connecteur (7) pour l'alimentation électrique de la soupape motorisée. Dans cet exemple, les conduits d'admission (8a) et d'échappement (8b) sont rapportés, fixés à l'aide de vis (11a à 11d), sur le corps de vanne (10). Le boitier (1) est fermé par un couvercle (14), collé ou soudé, et il présente des moyens de fixation à une structure d'accueil externe (non montrée) sous la forme de perçages (9a, 9b visibles en figure 3).

Comme visible en figure 2, à l'intérieur du boitier (1) se trouvent le train d'engrenages réducteur (2), le moteur électrique (3), un circuit imprimé (4) pour l'accueil d'une électronique de pilotage et un boisseau (5). Le boitier (1) surmoule les pistes de connexion électrique (6) de la soupape motorisée afin de former le connecteur (7). Le boitier (1) forme également en une seule pièce le corps de vanne (10) des conduits d'admission (8a) et d'échappement (8b), ainsi que les oreilles de fixation (9a, 9b) de la soupape motorisée à son support.

Le boitier (1) forme un premier palier (12a) traversant, permettant à la roue de sortie (13) du train d'engrenages (2) d'entrainer mécaniquement le boisseau (5). Ce premier palier (12a) est également prolongé par un joint à lèvre (19) permettant d'isoler des vapeurs d'essence le moteur électrique (3) et le circuit imprimé (4). Un second palier (12b) de la roue de sortie (13) est formé par un couvercle (14) qui est solidarisé au boitier (1) afin de l'étanchéifier.

La vanne à boisseau formée par la partie supérieure du boitier (1) contient en son centre le boisseau (5) de forme sphérique maintenu de part et d'autre par les sièges du boisseau (15a, 15b) dont la pré-charge et l'étanchéité sont assurées par deux joints toriques (16a, 16b) en contact avec le conduit d'admission (8a) d'un côté et le conduit d'échappement (8b) de l'autre. Lesdits conduits sont solidarisés avec le boitier (1) à l'aide de vis auto-taraudeuses (11a à 11d).

Ce premier mode de réalisation comporte donc trois joints (19, 16a et 16b) mais il est possible, toujours dans le cadre de l'invention, de proposer des réalisations qui présentent deux joints, voire même un seul joint comme il est décrit plus loin.

La figure 3 présente une vue de dessus sans couvercle de la soupape motorisée qui permet de mieux apprécier la présence du moteur électrique (3), formé d'un stator (20) et d'un rotor (21) associé à un train d'engrenages réducteur (2), ici formé de trois étages d'engrenages droits, bien que ce choix ne soit pas limitatif pour la présente invention. La dernière roue est la roue de sortie (13) qui entraine le boisseau (5) non visible sur cette figure.

La figure 4 présente le boitier (1) isolé. Le corps de vanne (10) fait partie intégrante du boitier (1), c'est-à-dire formant une seule pièce, et l'ensemble peut, par exemple, être réalisé par injection d'une matière plastique. Dans cette version, qui est celle utilisée dans le premier mode de réalisation, les conduits d'admission (8a) et d'échappement (8b) sont fixés sur le corps de vanne (10), mais il peut être envisagé de former, avec le boitier (1) et le corps de vanne (10), l'un desdits conduits (8a, 8b) voire même les deux conduits (8a, 8b), comme il est montré plus loin.

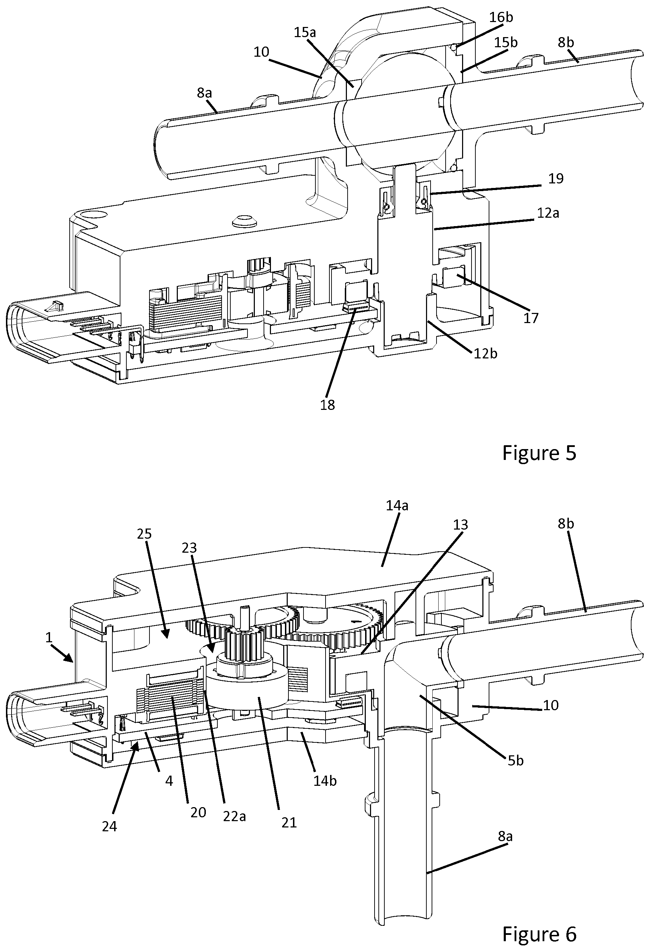

La figure 5 présente un deuxième exemple de réalisation où l'un des conduits, ici le conduit d'admission (8a), fait partie intégrante du boitier (1), c'est-à-dire qu'il est formé avec le boitier (1), par exemple par opération d'injection d'une matière plastique. Cette réalisation avantageuse permet de réduire le nombre de pièces, de supprimer un joint d'étanchéité et une étape de fixation du conduit (8a) au boitier (1) ainsi que de supprimer des éléments de fixation. Ainsi, il n'y a que deux joints d'étanchéité utilisés (19, 16b).

Dans cet exemple, la roue de sortie (13) est solidaire d'un aimant capteur (17) traversant, permettant à une sonde magnéto-sensible (18) placée sur le circuit imprimé (4) de connaitre précisément sa position et de s'affranchir des erreurs de positionnement du train d'engrenages (2) et du moteur électrique (3).

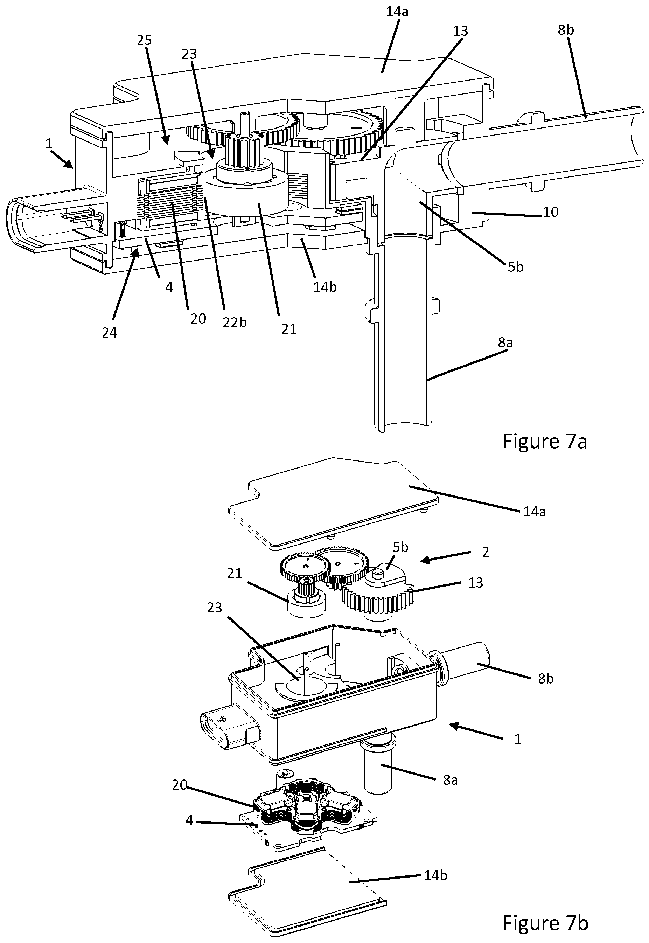

La figure 6 présente une alternative qui permet de s'affranchir du joint d'étanchéité (19) de la roue de sortie (13) ainsi que des autres joints statiques. En effet, dans ce mode de réalisation, les éléments sensibles aux vapeurs d'essence, tels que le stator (20) du moteur électrique ainsi que le circuit imprimé (4) qui porte l'électronique de pilotage, ne sont pas en contact avec les vapeurs d'essence. Cela est possible par l'isolement du stator (20) par rapport au rotor (21), soit par surmoulage du stator (20), celui-ci étant séparé du rotor (21) par une peau de surmoulage (22a) - comme montrée en figure 6 -, soit par le positionnement du stator (20) dans une cavité (23), le stator (20) étant alors séparé du rotor (21) par une fine paroi (22b) - comme montré en figure 7a.

Dans cet exemple, le boisseau (5b) est de type cylindrique et les conduits d'admission (8a) et d'échappement (8b) sont formés avec le boitier (1). Avantageusement, le boisseau (5b) fait partie intégrante de la roue de sortie (13), le boisseau (5b) et la roue de sortie (13) formant une seule pièce.

S'affranchir du joint d'étanchéité sur la roue de sortie (13) permet avantageusement de limiter les couples de frottement à vaincre par le moteur et ainsi de minimiser la consommation électrique, voire même de dimensionner un moteur de plus faible encombrement.

Les réalisations des figures 6 et 7a présentent de part et d'autre du boitier (1) des logements (24, 25). Le premier logement (24) sert à installer le circuit imprimé (4) au-dessus du stator (20), que celui-ci soit surmoulé avec le boitier (1) comme en figure 6 ou déposé dans le boitier (1) comme montré en figure 7a et 7b. Le deuxième logement (25) permet d'installer le train d'engrenages réducteur (2). Les logements (24, 25) sont fermés par des couvercles, respectivement (14b, 14a), qui sont collés ou soudés au boitier (1).

## Revendications

1. - Vanne motorisée comportant un corps (10) avec au moins un conduit d'admission (8a) et un conduit d'échappement (8b), un organe d'obturation sous la forme d'un boisseau (5) monté mobile dans le corps (10) pour obturer ou libérer un passage entre ledit conduit d'admission (8a) et ledit conduit d'échappement (8b), et un système motorisé de régulation pour commander le déplacement du boisseau (5), ledit système motorisé de régulation comprenant un motoréducteur comprenant un moteur électrique (3) et un train d'engrenages (2) réducteur, ledit train d'engrenages (2) comprenant une roue de sortie (13) déplaçant en rotation le boisseau (5) de ladite vanne afin de permettre une ouverture progressive de la vanne **caractérisée en ce que** ledit motoréducteur est formé d'un boîtier (1) formé par injection d'une matière plastique, ledit moteur électrique (3) comprenant un stator (20) surmoulé par ladite matière plastique, ledit boîtier (1) comprenant en outre le corps de vanne (10) formant une seule pièce avec le boîtier (1).

2. - Vanne motorisée selon la revendication 1 **caractérisée en ce que** ladite roue de sortie (13) est solidaire d'un aimant de capteur (17), une sonde magnétosensible (18) étant positionnée au voisinage dudit aimant de capteur (17).

3. - Vanne motorisée selon la revendication 1 **caractérisée en ce que** la roue de sortie (13) est formée intégralement avec le boisseau (5).

4. - Vanne motorisée selon la revendication 1 **caractérisée en ce que** le boîtier (1) forme un premier logement (23) pour le positionnement d'un circuit imprimé (4) recevant une électronique de commande dudit moteur (3) et un deuxième logement (24) pour le positionnement des engrenages dudit train réducteur (2) et **en ce que** le rotor (21) du moteur électrique (3) est logé dans le deuxième logement (24) et séparé du stator (20) par une peau de surmoulage ou une paroi (22a, 22b).

5. - Vanne motorisée selon la revendication 1 **caractérisée en ce que** ledit boîtier (1) est prolongé par un connecteur électrique (7).

6. - Vanne motorisée selon la revendication 1 **caractérisée en ce que** l'un au moins desdits conduits d'admission (8a) ou d'échappement (8b) est formé intégralement avec ledit boîtier (1).

7. - Vanne motorisée selon l'une des revendications précédentes **caractérisée en ce qu'**elle est intégrée, en tant que soupape, au circuit de purge de l'absorbeur de vapeurs de carburant.

8. - Circuit de purge d'un absorbeur de vapeurs de carburant **caractérisé en ce qu'**il comprend une vanne motorisée selon la revendication 1, ladite vanne comportant un corps (10) avec au moins un conduit d'admission (8a) et un conduit d'échappement (8b), un organe d'obturation sous la forme d'un boisseau (5) monté mobile dans le corps (10) pour obturer ou libérer un passage entre ledit conduit d'admission (8a) et ledit conduit d'échappement (8b), et un système motorisé de régulation pour commander le déplacement du boisseau (5), ledit système motorisé de régulation comprenant un motoréducteur comprenant un moteur électrique (3) et un train d'engrenages (2) réducteur, ledit train d'engrenages (2) comprenant une roue de sortie (13) déplaçant en rotation le boisseau (5) de ladite vanne afin de permettre une ouverture progressive de la vanne **caractérisée en ce que** la vanne est intégrée, en tant que soupape, au circuit de purge de l'absorbeur de vapeurs de carburant.

## Patentansprüche

1. Motorisiertes Ventil umfassend einen Körper (10) mit mindestens einem Einlasskanal (8a) und einem Auslasskanal (8b), einem Verschlusselement in Form eines in dem Körper (10) beweglich gelagerten Ventilhahns (5) zum Verschließen oder Freigeben eines Durchgangs zwischen dem Einlasskanal (8a) und dem Auslasskanal (8b), sowie ein motorisiertes Regelsystem zum Steuern der Bewegung des Ventilhahns (5), wobei das motorisierte Regelsystem einen Getriebemotor umfassend einen Elektromotor (3) und ein Untersetzungsgetriebe (2) umfasst, wobei das Getriebe (2) ein Abtriebsrad (13) umfasst, das den Hahn (5) des Ventils in Drehung versetzt, um ein progressives Öffnen des Ventils zu ermöglichen, **dadurch gekennzeichnet, dass** der Getriebemotor aus einem Gehäuse (1) besteht, das durch Spritzgießen aus Kunststoff hergestellt ist, wobei der Elektromotor (3) einen Stator (20) umfasst, der mit dem Kunststoff umspritzt ist, wobei das Gehäuse (1) weiter den Ventilkörper (10) umfasst, der ein einziges Teil mit dem Gehäuse (1) bildet.

2. Motorisiertes Ventil nach Anspruch 1, **dadurch gekennzeichnet, dass** das Abtriebsrad (13) fest mit einem Sensormagneten (17) verbunden ist, wobei eine magnetempfindliche Sonde (18) in der Nähe des Sensormagneten (17) positioniert ist.

3. Motorisiertes Ventil nach Anspruch 1, **dadurch gekennzeichnet, dass** das Abtriebsrad (13) einstückig mit dem Ventilhahn (5) gebildet ist.

4. Motorisiertes Ventil nach Anspruch 1, **dadurch gekennzeichnet, dass** das Gehäuse (1) eine erste Aufnahme (23) für die Positionierung einer Leiterplatte (4) bildet, die eine Steuerelektronik des Motors (3) aufnimmt, und eine zweite Aufnahme (24) für die Positionierung der Zahnräder des Untersetzungsgetriebes (2), und dadurch, dass der Rotor (21) des Elektromotors (3) in der zweiten Aufnahme (24) aufgenommen ist und durch eine Umspritzung oder eine Wand (22a, 22b) vom Stator (20) getrennt ist.

5. Motorisiertes Ventil nach Anspruch 1, **dadurch gekennzeichnet, dass** das Gehäuse (1) durch einen elektrischen Stecker (7) verlängert ist.

6. Motorisiertes Ventil nach Anspruch 1, **dadurch gekennzeichnet, dass** mindestens eine der Einlass- (8a) oder der Auslassleitungen (8b) einstückig mit dem Gehäuse (1) gebildet ist.

7. Motorisiertes Ventil nach einem der vorstehenden Ansprüche, **dadurch gekennzeichnet, dass** es als Ventil in den Entlüftungskreislauf des Kraftstoffdampfabsorbers integriert ist.

8. Entlüftungskreislauf für einen Kraftstoffdampfabsorber, **dadurch gekennzeichnet, dass** er ein motorisiertes Ventil nach Anspruch 1 umfasst, wobei das Ventil einen Körper (10) mit mindestens einem Einlasskanal (8a) und einem Auslasskanal (8b), ein Verschlusselement in Form eines Ventilhahn (5), der beweglich im Körper (10) angebracht ist, um einen Durchgang zwischen dem Einlasskanal (8a) und dem Auslasskanal (8b) zu verschließen oder freizugeben, und ein motorisiertes Regelsystem zum Steuern der Bewegung des Ventilhahns (5) umfasst, wobei das motorisierte Regelsystem einen Getriebemotor umfassend einen Elektromotor (3) und ein Untersetzungsgetriebe (2) umfasst, wobei das Getriebe (2) ein Abtriebsrad (13) umfasst, das den Hahn (5) des Ventils in Drehung versetzt, um ein progressives Öffnen des Ventils zu ermöglichen, **dadurch gekennzeichnet, dass** das Ventil als Ventil in den Entlüftungskreislauf des Kraftstoffdampfabsorbers integriert ist.

## Claims

1. Motorised valve having a body (10) with at least one intake duct (8a) and one outlet duct (8b), a plugging member in the form of a plug (5) movably mounted in the body (10) to plug or release a passage between said intake duct (8a) and said outlet duct (8b), and a motorised control system for controlling the movement of the plug (5), said motorised control system comprising a gear motor comprising an electric motor (3) and a reduction gear train (2), said gear train (2) comprising an exit wheel (13) rotating the plug (5) of said valve so as to allow progressive opening of the valve, **characterised in that** said gear motor is formed by a casing (1) formed by injection of a plastic material, said electric motor (3) comprising a stator (20) overmoulded by said plastic material, said casing (1) further comprising the valve body (10) forming one single part with the casing (1).

2. Motorised valve according to claim 1, **characterised in that** said exit wheel (13) is integral with a sensor magnet (17), a magnetosensitive probe (18) being positioned in the vicinity of said sensor magnet (17).

3. Motorised valve according to claim 1, **characterised in that** the exit wheel (13) is integrally formed with the plug (5).

4. Motorised valve according to claim 1, **characterised in that** the casing (1) forms a first housing (23) for the positioning of a printed circuit (4) receiving control electronics of said motor (3) and a second housing (24) for the positioning of the gears of said reduction train (2) and **in that** the rotor (21) of the electric motor (3) is housed in the second housing (24) and separated from the stator (20) by an overmoulding skin or a wall (22a, 22b).

5. Motorised valve according to claim 1, **characterised in that** said casing (1) is extended by an electric connector (7).

6. Motorised valve according to claim 1, **characterised in that** the at least one of said intake (8a) or outlet (8b) ducts is integrally formed with said casing (1).

7. Motorised valve according to any one of the preceding claims, **characterised in that** it is integrated, as a valve, to the drain circuit of the evaporative emission canister.

8. Drain circuit of an evaporative emission canister, **characterised in that** it comprises a motorised valve according to claim 1, said valve having a body (10) with at least one intake duct (8a) and one outlet duct (8b), a plugging member in the form of a plug (5) movable mounted in the body (10) to plug or release a passage between said intake duct (8a) and said outlet duct (8b), and a motorised control system for controlling the movement of the plug (5), said motorised control system comprising a gear motor comprising an electric motor (3) and a reduction gear train (2), said gear train (2) comprising an exit wheel (13) rotating the plug (5) of said valve so as to allow progressive opening of the valve, **characterised in that** the valve is integrated, as a valve, to the drain circuit of the evaporative emission canister.
